# EUROPEAN PATENT SPECIFICATION

(11) **EP 3 293 444 B1**
(45) Date of publication and mention of the grant of the patent: **28.08.2019**
(21) Application number: 16789015.1
(22) Date of filing: 21.01.2016
(51) Int. Cl.: F21S 10/04, F21V 23/00, F21K 9/232, F21K 9/238, F21V 23/04, F21Y 115/10, F21Y 107/30, F21Y 107/40

(54) **360-DEGREE LED LIGHT-EMITTING FLAME LAMP ASSEMBLY**
ANORDNUNG MIT EINER FLAMMENLAMPE MIT 360-GRAD-LED-LICHTEMISSION
ENSEMBLE COMPRENANT UNE LAMPE IMITANT UNE FLAMME, ÉMETTANT À 360 DEGRÉS

(30) Priority: 05.05.2015 CN 201510152837
(43) Date of publication of application: 14.03.2018
(73) Proprietor: Mumedia Photoelectric Limited, Guangzhou, Guangdong 510460 (CN)
(72) Inventor: WEI, Ninghua, Guangzhou Guangdong 510460 (CN)
(74) Representative: Sun, Yiming
(86) International application number: PCT/CN2016/071583
(87) International publication number: WO 2016/177021

(56) References cited:
- EP-A1- 2 799 758
- CN-A- 101 603 661
- CN-A- 101 865 413
- CN-A- 104 728 762
- CN-U- 201 496 785
- CN-U- 203 190 145
- CN-U- 204 153 691
- CN-U- 204 300 968
- CN-U- 204 554 684
- DE-U1-202012 004 210
- DE-U1-202014 105 614
- US-A- 5 379 200
- US-A- 5 924 784
- US-A1- 2003 072 154

## Description

### FIELD OF THE INVENTION

This invention relates to a 360-degree LED light-emitting flame lamp assembly according to claim 1 that is capable of simulating a flame shaking effect.

### BACKGROUND OF THE INVENTION

With the development of technology, LEDs continue to gain wider applications. Squares, gardens, and the like can be made more lively with colorful lights emitted by various floodlights including LED street lights, garden lights, etc. Different colour tones can bring different render effects to the surrounding environment.

In addition to lighting effects, some lamps also have decorative effects. Within the many different forms of lamps, there exists a kind of flame lamp assembly that is capable of simulating the leaping and flickering of burning flames. A traditional flame lamp assembly employs a lit quartz light bulb and a red silk ribbon that is blown by a fan. The light bulb shines onto the red silk ribbon, giving the lamp the look of a burning flame. However, due to the presence of the fan, noises are unavoidable, and power consumption is increased. These lamps are limited to indoor use and are not environmentally friendly.

US 5 379 200 A issued to Echard provides a portable electric lantern apparatus. The portable electric lantern apparatus includes a base assembly which includes a housing portion, a lamp-supporting portion supported by the housing portion, and a light-diffuser-retaining portion supported by the lamp-supporting portion. A lamp assembly is supported by the lamp-supporting portion of the base assembly. The lamp assembly utilizes a lamp that includes a bulbous bottom portion and pointed top portion such that the lamp resembles a flame. An illumination modulation assembly is placed in an electrical circuit between the lamp and the electrical power source. The illumination modulation assembly includes both a circuit interrupter for causing illumination from the lamp to flicker in simulation of a flame and a dimmer assembly for dimming illumination provided by the lamp. As a result, the prior art disclosed in US005379200A are suited for simulating a very small flame since it utilizes only a lamp. Moreover, in Echard, due to flame simulating is realized by illumination from the lamp to flicker, shape of the flame is limited as flicking type.

CN 101 603 661 A issued to Lan provides a flame lamp assembly with switching mode. The flame lamp assembly with switching mode comprises a lamp head, the bottom case and LED arrays; a circuit board is provided in the bottom case. The LED arrays includes a plurality of LEDs. The circuit board includes a PCB board, serial interfaces respectively assembled therewith, an intelligent control system CPU and a memory. The flame lamp further includes a LED driver and a programmable switch for switching between flame mode and lighting mode; one end of a data cable is plugged into a serial interface and the other end is assembled with the programmable switch; programs for flame mode and lighting mode are stored in the memory; the programmable switch, the LED arrays and the memory are respectively connected with the intelligent control system CPU. Switching between the flame mode and the lighting mode can be realized for the flame lamp assembly. Lan simulates a flame by the LED arrays, but Lan needs to transmit time series data from the memory to the LED arrays by SPI serial communication mode and convert the series data into parallel signal for supplying power for each said LED, which has the disadvantage of complex process. On the other hand, multiple shift registers are needed for converting the time series data into the parallel signals in Lan, making it costly to simulate a flame. EP 2799758 A1 discloses another known LED lamp emitting light almost omnidirectionally.

### SUMMARY OF THE INVENTION

The present invention provides a 360-degree light-emitting flame lamp assembly according to claim 1 that is free of noise, has reduced power consumption and is suitable for indoor and outdoor use.

The technical solution of the present invention is a flame lamp assembly, comprising a lamp shade and a light source disposed inside the lamp shade, the light source comprises a lamp shell and a base provided at one end of the lamp shell, a lamp cap is provided on the base, a lamp board holder which is one rectangular frame or two or more rectangular frames is provided inside the lamp shell, the lamp board holder is wrapped with a cylindrical or polyhedral shaped LED circuit board, a plurality of LED bulbs are arranged on the LED circuit board, the LED circuit board, a control circuit board, a power supply and the lamp cap are consecutively electrically connected, the control circuit board comprises a controller, the controller is connected to a filter module and a voltage regulator stabilizer which are both connected to the power supply, and a PWM (Pulse Width Modulation) driving circuit which is connected to the LED circuit board, the controller sends timing signals to the PWM driving circuit, the PWM driving circuit outputs PWM signals according to the timing signals received, to control the on/off and blinking of the LED bulbs, in order to achieve a flame-like effect.

Preferably, the LED bulbs are arranged in a wavy shape on an upper part of the LED circuit board, and the LED bulbs are arranged in a matrix on middle and lower parts of the LED circuit board; when the upper, wavy-shape arranged LED bulbs are all or successively lit, a flame-tip shape is formed; when the middle and lower, matrix-arranged LED bulbs are all lit, shape of a main flame body is formed.

Preferably, the PWM driving circuit includes a PWM modulation circuit that is connected to the controller and an IC (Integrated Circuit) driving unit that is connected to the PWM modulation circuit, the IC driving unit is connected to the LED circuit board.

Preferably, said controller is further connected to an infrared receiving module and a DMX (Digital Multiplex) input module.

Preferably, the infrared receiving module comprises an infrared receiving head, said infrared receiving head is connected to an IO (input/out) port of the controller via a pull-up resistor to stabilize signal.

Preferably, the DMX input module comprises a signal-stabilizing DMX driver IC and an anti-jamming protection circuit.

Preferably, the lamp shell is a cylindrical-shaped hollow shell with two open ends, the base is provided at one open end of the lamp shell, and a top cover is provided at the other open end of the lamp shell.

According to the invention, the lamp board holder is one rectangular frame or two or more rectangular frames.

Preferably, the lamp board holder is provided with an opening on the side of its frame corresponding to the base, a wire connecting the power supply and the lamp cap is passed through the opening, or the power supply is mounted at the opening.

Preferably, the LED circuit board is a flexible LED circuit board, said flexible LED circuit board is wrapped around and fixed to the lamp board holder.

As a result of the above-mentioned solution, the 360-degree LED light-emitting flame lamp assembly of the present invention has a multi-directional flame jumping effect when viewed from 360 degrees sideways through the lamp shade. This is achieved through the control of the on/off and blinking of the LED bulbs on the cylindrical or polygonal LED circuit board in a certain time sequence. The flame effect is formed by means of light emission of the light source, so the use of devices such as fans and ribbons are avoided. Therefore, the objective of creating a flame lamp assembly that is free of noise, has reduced power consumption and is suitable for both indoor and outdoor use is achieved.

### BRIEF DESCRIPTION OF THE DRAWINGS

Figure 1 is a schematic view of a lamp shade according to an embodiment of the present invention.
Figure 2 is an exploded view of a light source according to an embodiment of the present invention.
Figure 3 is a schematic view of a control circuit board module according to an embodiment of the present invention.
Figure 4 is a schematic view of an LED circuit board according to an embodiment of the present invention.
Figure 5 is a schematic view of a circuit layout of an LED circuit board according to an embodiment of the present invention.
Figure 6 is a schematic view of a lamp board holder according to an embodiment of the present invention.

### DETAILED DESCRIPTION OF THE ILLUSTRATED EMBODIMENTS

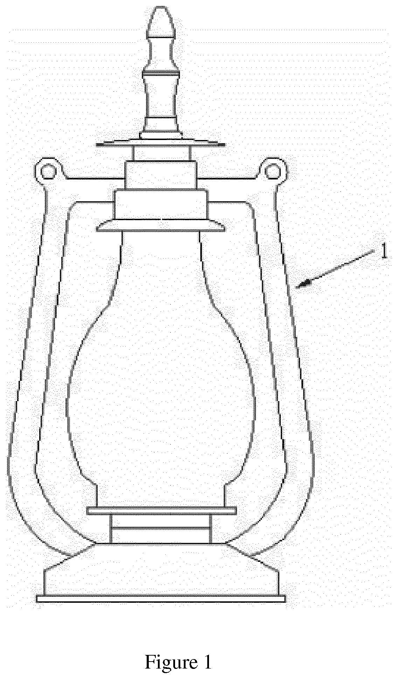

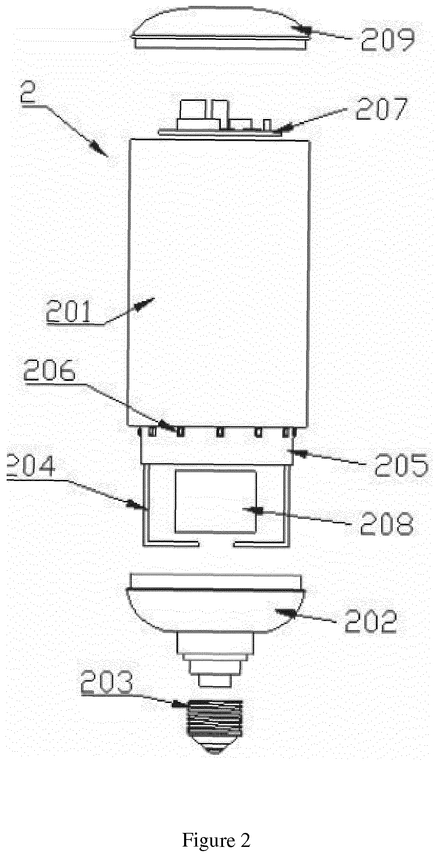

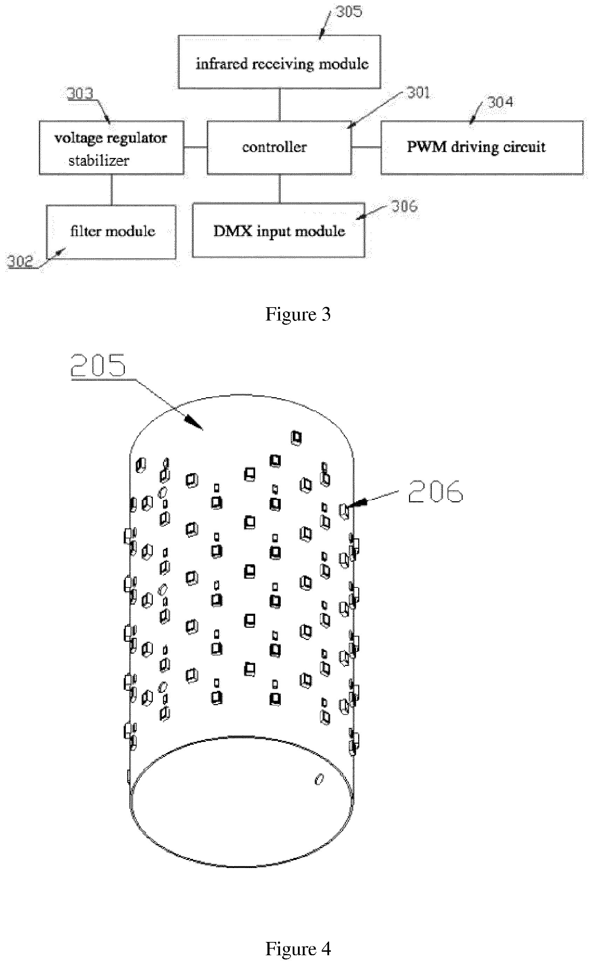

As shown in figure 1-6, a 360-degree LED light-emitting flame lamp assembly comprises a lamp shade 1 and a light source 2 disposed inside the lamp shade 1. The lamp shade 1 includes a styling frame and a light-transmitting portion enclosing the styling frame. The light-transmitting portion may be transparent or frosted. It is preferable to use a frosted light-transmitting portion to scatter light, providing a soft and natural flame effect. As shown in figure 2, the light source 2 comprises a lamp shell 201 and a base 202 provided at one end of the lamp shell 201. A lamp cap 203 is provided on the base 202. A lamp board holder 204 is provided inside the lamp shell 201. The lamp board holder is wrapped with a cylindrical or polyhedral shaped LED circuit board 205. A plurality of LED bulbs 206 are arranged on the LED circuit board 205. The LED circuit board 205, a control circuit board 207, a power supply 208 and the lamp cap 203 are consecutively electrically connected. As shown in figure 3, the control circuit board 207 comprises a controller 301, the controller 301 is connected to a filter module 302 and a voltage regulator stabilizer 303 which are both connected to the power supply 208, and a PWM driving circuit 304 which is connected to the LED circuit board 205. The controller 301 sends timing signals to the PWM driving circuit 304. The PWM driving circuit 304 outputs PWM signals according to the timing signals received to control the on/off and blinking of the LED bulbs 206, achieving a flame-like effect.

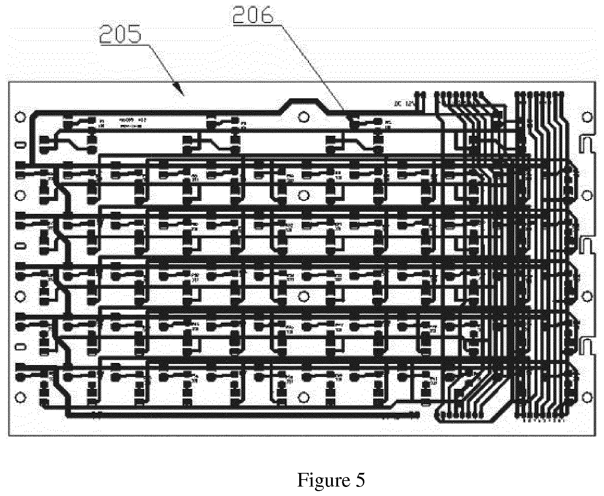

Figure 5 is a schematic view of a circuit layout of an LED circuit board according to an embodiment of the present invention. In order to more vividly simulating the leaping and flickering of flames, as shown in figure 4, the LED bulbs 206 are arranged in a wavy shape on an upper part of the LED circuit board 205, and are arranged in a matrix on middle and lower parts of the LED circuit board 205 in this embodiment. When the upper, wavy-shape arranged LED bulbs 206 are all or successively lit, a flame-tip shape is formed; when the middle and lower, matrix-arranged LED bulbs 206 are lit, shape of a main flame body is formed.

Regarding detailed module design, in the present embodiment, the PWM driving circuit 304 includes a PWM modulation circuit 3041 that is connected to the controller 301 and an IC driving unit 3042 that is connected to the PWM modulation circuit 3041. The IC driving unit 3042 is connected to the LED circuit board 205.

After the above-mentioned module design, the lighting control of the LED circuit board can be achieved according to the preset time sequence of the controller. In practice, the ability to further adjust the lighting effect is usually required. To achieve this objective, the controller 301 is further connected to an infrared receiving module 305 and a DMX input module 306 in the present embodiment.

Regarding the design of the infrared receiving module 305 and DMX input module 306, to further stabilize signal transfer, the infrared receiving module 305 comprises an infrared receiving head in the present embodiment. The infrared receiving head is connected to an IO port of a CPU via a pull-up resistor to stabilize signal. The CPU acts as the controller 301. The DMX input module comprises a signal-stabilizing DMX driver IC and an anti-jamming protection circuit.

Regarding the detailed structure design of the lighting source, in the present embodiment, the lamp shell 201 is a cylindrical-shaped hollow shell with two open ends. The base 202 is provided at one open end of the lamp shell 201, a top cover 209 is provided at the other open end of the lamp shell 201. The lamp shell 201, the base 202 and the top cover 209 constitute an external structure of the light source. A hollow interior of the lamp shell 201 is employed for the mounting of the lamp board holder 204, the LED circuit board 205, the control circuit board 207 and the power supply 208.

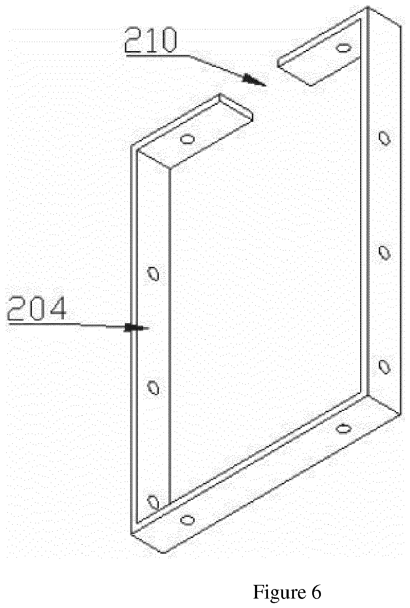

In the present embodiment, as shown in figure 6, the lamp board holder 204 is a rectangular frame. In practice, it is also possible to make the lamp board holder 204 into other three-dimensional frame shapes, such as cylindrical shapes (not part of the invention), frame shapes cross-formed by two or more rectangular frames, and the like (not part of the invention).

In the present embodiment, the lamp board holder 204 is provided with an opening 210 on the side of its frame corresponding to the base 202. A wire connecting the power supply 208 and the lamp cap 203 is passed through the opening 201, or the power supply 208 is mounted at the opening 210.

In the present embodiment, the LED circuit board 205 is a flexible LED circuit board. The flexible LED circuit board is wrapped around and fixed to the lamp board holder 204.

The above description is only a preferred embodiment of the invention, and is not intended to limit the scope of the invention. The scope of the invention is defined by the subject-matter of the appended claims.

## Claims

1. An LED light-emitting flame lamp assembly, comprising a lamp shade (1) and a light source (2) disposed inside the lamp shade (1), wherein the light source (2) comprises a lamp shell (201) and a base (202) provided at one end of the lamp shell (201), a lamp cap (203) is provided on the base (202), a lamp board holder (204) which is one rectangular frame or two or more rectangular frames is provided inside the lamp shell, the lamp board holder (204) is wrapped with a cylindrical or polyhedral shaped LED circuit board (205), a plurality of LED bulbs (206) are arranged on the LED circuit board (205), the LED circuit board (205), a control circuit board (207), a power supply (208) and the lamp cap (203) are consecutively electrically connected, the control circuit board (207) comprises a controller (301), the controller (301) is connected to a filter module (302) and a voltage regulator stabilizer (303) which are both connected to the power supply (208), and a PWM driving circuit (304) which is connected to the LED circuit board (205), the controller (301) sends timing signals to the PWM driving circuit(304), the PWM driving circuit (304) outputs PWM signals according to the timing signals received, to control the on/off and blinking of the LED bulbs (206), in order to achieve a flame-like effect.

2. The LED light-emitting flame lamp assembly according to claim 1, wherein the LED bulbs (206) are arranged in a wavy shape on an upper part of the LED circuit board (205), forming a flame-tip shape; the LED bulbs (206) are arranged in a matrix on middle and lower parts of the LED circuit board (205), forming shape of a main flame body.

3. The LED light-emitting flame lamp assembly according to claim 1, wherein the PWM driving circuit (304) includes a PWM modulation circuit (3041) that is connected to the controller (301) and an IC driving unit (3042) that is connected to the PWM modulation circuit (3041), the IC driving unit (3042) is connected to the LED circuit board (205).

4. The LED light-emitting flame lamp assembly according to claim 1, wherein the controller (301) is further connected to an infrared receiving module (305) and a DMX input module (306).

5. The LED light-emitting flame lamp assembly according to claim 4, wherein the infrared receiving module (305) comprises an infrared receiving head, said infrared receiving head is connected to an IO port of the controller via a pull-up resistor to stabilize signal.

6. The LED light-emitting flame lamp assembly according to claim 4, wherein the DMX input module (306) comprises a DMX driver IC and an anti-jamming protection circuit.

7. The LED light-emitting flame lamp assembly according to claim 1, wherein the lamp shell (201) is a cylindrical-shaped hollow shell with two open ends, the base (202) is provided at one open end of the lamp shell (201), a top cover (209) is provided at the other open end of the lamp shell (201).

8. The LED light-emitting flame lamp assembly according to claim 1, wherein the lamp board holder (204) is provided with an opening (210) on the side of its frame corresponding to the base (202), a wire connecting the power supply (208) and the lamp cap (203) is passed through the opening (210), or the power supply (208) is mounted at the opening (210).

9. The LED light-emitting flame lamp assembly according to claim 1, wherein the LED circuit board (205) is a flexible LED circuit board, said flexible LED circuit board is wrapped around and fixed to the lamp board holder (204).

## Patentansprüche

1. Lichtemittierende LED-Flammenleuchtenanordnung, umfassend einen Lampenschirm (1) und eine Lichtquelle (2), die im Inneren des Lampenschirms (1) angeordnet ist, wobei die Lichtquelle (2) eine Lampenschale (201) und einen Sockel (202), der an einem Ende der Lampenschale (201) bereitgestellt ist, umfasst, wobei eine Lampenfassung (203) an dem Sockel (202) bereitgestellt ist, ein Lampenplattenhalter (204), bei dem es sich um einen rechteckigen Rahmen oder zwei oder mehr rechteckige Rahmen handelt, im Inneren der Lampenschale bereitgestellt ist, der Lampenplattenhalter (204) mit einer zylinder- oder polyederförmigen LED-Leiterplatte (205) umwickelt ist, mehrere LED-Glühlampen (206) auf der LED-Leiterplatte (205) angeordnet sind, die LED-Leiterplatte (205), eine Steuerschaltungsplatte (207), eine Stromversorgung (208) und die Lampenfassung (203) nacheinander elektrisch verbunden sind, die Steuerschaltungsplatte (207) eine Steuerung (301) umfasst, die Steuerung (301) mit einem ersten Filtermodul (302) und einem Spannungsregelungsstabilisator (303), die beide mit der Energieversorgung (208) verbunden sind, und mit einer PWM-Treiberschaltung (304), die mit der LED-Leiterplatte (205) verbunden ist, verbunden ist, die Steuerung (301) Taktsignale an die PWM-Treiberschaltung (304) sendet, wobei die PWM-Treiberschaltung (304) PWM-Signale gemäß den empfangenen Taktsignalen ausgibt, um das Ein-/Ausschalten und Blinken der LED-Glühlampen (206) zu steuern, um einen flammenähnlichen Effekt zu erzielen.

2. Lichtemittierende LED-Flammenleuchtenanordnung nach Anspruch 1, wobei die LED-Glühlampen (206) in einer gewellten Form auf einem oberen Teil der LED-Leiterplatte (205) angeordnet sind und eine Flammenspitzenform bilden; wobei die LED-Glühlampen (206) in einer Matrix auf dem mittleren und unteren Teil der LED-Leiterplatte (205) angeordnet sind und eine Hauptflammenkörperform bilden.

3. Lichtemittierende LED-Flammenleuchtenanordnung nach Anspruch 1, wobei die PWM-Treiberschaltung (304) eine PWM-Modulationsschaltung (3041), die mit der Steuerung (301) verbunden ist, und eine IC-Treibereinheit (3042), die mit der PWM-Modulationsschaltung (3041) verbunden ist, beinhaltet, wobei die IC-Treibereinheit (3042) mit der LED-Leiterplatte (205) verbunden ist.

4. Lichtemittierende LED-Flammenleuchtenanordnung nach Anspruch 1, wobei die Steuerung (301) ferner mit einem Infrarot-Empfangsmodul (305) und einem DMX-Eingangsmodul (306) verbunden ist.

5. Lichtemittierende LED-Flammenleuchtenanordnung nach Anspruch 4, wobei das Infrarot-Empfangsmodul (305) einen Infrarot-Empfangskopf umfasst, wobei der Infrarot-Empfangskopf über einen Pull-up-Widerstand mit einem E/A-Anschluss der Steuerung verbunden ist, um ein Signal zu stabilisieren.

6. Lichtemittierende LED-Flammenleuchtenanordnung nach Anspruch 4, wobei das DMX-Eingangsmodul (306) eine DMX-Treiber-IC und Schutzschaltung gegen Störungen umfasst.

7. Lichtemittierende LED-Flammenleuchtenanordnung nach Anspruch 1, wobei die Lampenschale (201) eine zylinderförmige Hohlschale mit zwei offenen Enden ist, wobei der Sockel (202) an einem offenen Ende der Lampenschale (201) bereitgestellt ist und eine obere Abdeckung (209) an dem anderen offenen Ende der Lampenschale (201) bereitgestellt ist.

8. Lichtemittierende LED-Flammenleuchtenanordnung nach Anspruch 1, wobei der Lampenplattenhalter (204) auf der Seite seines Rahmens, die dem Sockel (202) entspricht, mit einer Öffnung (210) bereitgestellt ist, wobei ein Draht, der die Stromversorgung (208) und die Lampenfassung (203) verbindet, durch die Öffnung (210) geführt ist oder die Stromversorgung (208) an der Öffnung (210) angebracht ist.

9. Lichtemittierende LED-Flammenleuchtenanordnung nach Anspruch 1, wobei die LED-Leiterplatte (205) eine flexible LED-Leiterplatte ist, wobei die flexible LED-Leiterplatte um den Lampenplattenhalter (204) gewickelt und an diesem befestigt ist.

## Revendications

1. Ensemble lampe à flamme électroluminescente à DEL, comprenant un abat-jour (1) et une source de lumière (2) disposée à l'intérieur de l'abat-jour (1), dans lequel la source de lumière (2) comprend une enveloppe de lampe (201) et une base (202) pourvue à une extrémité de l'enveloppe de lampe (201), un culot de lampe (203) est monté sur la base (202), un support de tableau de lampe (204) qui est un cadre rectangulaire ou au moins deux cadres rectangulaires sont montés à l'intérieur de l'enveloppe de lampe, le support de tableau de lampe (204) est enveloppé d'une carte de circuit imprimé à DEL de forme cylindrique ou polyédrique (205), une pluralité d'ampoules à DEL (206) sont agencées sur la carte de circuit imprimé à DEL (205), la carte de circuit imprimé à DEL (205), une carte de circuit de commande (207), une alimentation électrique (208) et le culot de lampe (203) sont reliés consécutivement de manière électrique, la carte de circuit de commande (207) comprend un dispositif de commande (301), le dispositif de commande (301) est relié à un module de filtration (302) et à un stabilisateur de régulation de tension (303) qui sont tous les deux reliés à l'alimentation électrique (208), et un circuit d'entraînement PWM (304) qui est relié à la carte de circuit imprimé à DEL (205), le dispositif de commande (301) envoie des signaux de synchronisation au circuit d'entraînement PWM (304), le circuit d'entraînement PWM (304) délivre des signaux PWM conformément aux signaux de synchronisation reçus, afin de commander le système de marche-arrêt et le clignotement des ampoules à DEL (206), de façon à obtenir un effet semblable à une flamme.

2. Ensemble lampe à flamme électroluminescente à DEL selon la revendication 1, dans lequel les ampoules à DEL (206) sont agencées selon une forme ondulée sur une partie supérieure de la carte de circuit imprimé à DEL (205), formant une forme de pointe de flamme ; les ampoules à DEL (206) sont agencées dans une matrice sur des parties médiane et inférieure de la carte de circuit imprimé à DEL (205), formant la forme d'un corps principal de flamme.

3. Ensemble lampe à flamme électroluminescente à DEL selon la revendication 1, dans lequel le circuit d'entraînement PWM (304) comprend un circuit de modulation PWM (3041) qui est relié au dispositif de commande (301) et à une unité d'entraînement IC (3042) qui est reliée au circuit de modulation PWM (3041), l'unité d'entraînement IC (3042) est reliée à la carte de circuit imprimé à DEL (205).

4. Ensemble lampe à flamme électroluminescente à DEL selon la revendication 1, dans lequel le dispositif de commande (301) est relié à un module de réception infrarouge (305) et à un module d'entrée DMX (306).

5. Ensemble lampe à flamme électroluminescente à DEL selon la revendication 4, dans lequel le module de réception infrarouge (305) comprend une tête de réception infrarouge, ladite tête de réception infrarouge est reliée à un port d'entrée/sortie du dispositif de commande par l'intermédiaire d'une résistance de rappel vers le niveau haut afin de stabiliser le signal.

6. Ensemble lampe à flamme électroluminescente à DEL selon la revendication 4, dans lequel le module d'entrée DMX (306) comprend un IC de pilote DMX et un circuit de protection antibrouillage.

7. Ensemble lampe à flamme électroluminescente à DEL selon la revendication 1, dans lequel l'enveloppe de lampe (201) est une enveloppe creuse de forme cylindrique comportant deux extrémités d'ouverture, la base (202) est pourvue à une extrémité d'ouverture de l'enveloppe de la lampe (201), une couverture supérieure (209) est pourvue au niveau de l'autre extrémité d'ouverture de l'enveloppe de lampe (201).

8. Ensemble lampe à flamme électroluminescente à DEL selon la revendication 1, dans lequel le support de tableau de lampe (204) est muni d'une ouverture (210) située sur le côté de son cadre correspondant à la base (202), un câble reliant l'alimentation électrique (208) et le culot de lampe (203) est passé à travers l'ouverture (210), ou l'alimentation électrique (208) est montée au niveau de l'ouverture (210).

9. Ensemble lampe à flamme électroluminescente à DEL selon la revendication 1, dans lequel la carte de circuit imprimé à DEL (205) est une carte de circuit imprimé flexible à DEL, ladite carte de circuit imprimé flexible à DEL est enroulée autour du et fixée au support de tableau de lampe (204).
